Europäisches Patentamt

European Patent Office

Office européen des brevets

(19)

(11) Veröffentlichungsnummer : **0 370 419 B1**

(12) # EUROPÄISCHE PATENTSCHRIFT

(45) Veröffentlichungstag der Patentschrift :
**07.10.92 Patentblatt 92/41**

(51) Int. Cl.$^5$ : **B60J 7/053, B60H 1/26**

(21) Anmeldenummer : **89121397.7**

(22) Anmeldetag : **18.11.89**

(54) **Fahrzeugdach mit einer durch einen Deckel verschliessbaren Dachöffnung.**

(30) Priorität : **25.11.88 DE 3839806**

(43) Veröffentlichungstag der Anmeldung :
**30.05.90 Patentblatt 90/22**

(45) Bekanntmachung des Hinweises auf die
Patenterteilung :
**07.10.92 Patentblatt 92/41**

(84) Benannte Vertragsstaaten :
**DE ES FR GB IT**

(56) Entgegenhaltungen :
**CH-A- 428 462**
**DE-B- 1 199 638**

(73) Patentinhaber : **AUDI AG**
**Auto-Union-Strasse 1 Postfach 220**
**W-8070 Ingolstadt (DE)**

(72) Erfinder : **Hasler, Franz**
**Am Hasel 3**
**W-8071 Wettstetten (DE)**
Erfinder : **Uebelstädt, Manfred**
**Neubaustrasse 19**
**W-8071 Wettstetten (DE)**
Erfinder : **Mönch, Ernst**
**Reinekestrasse 25**
**W-8000 München 90 (DE)**

(74) Vertreter : **Engelhardt, Harald**
**AUDI AG Patentabteilung Postfach 220**
**W-8070 Ingolstadt (DE)**

EP 0 370 419 B1

## Beschreibung

Die Erfindung bezieht sich auf ein Fahrzeugdach mit einer von einem umlaufenden Rahmen begrenzten und durch einen Deckel verschließbaren Dachöffnung gemäß dem Oberbegriff des Patentanspruches 1.

Derartige Deckel zum Verschließen einer Dachöffnung sind meist derart in einer Führung aufgenommen, daß ihre Hinterkante gegenüber dem Fahrzeugdach ausstellbar ist, um eine verbesserte Belüftung des Fahrgastraumes zu erreichen. Darüber hinaus sind auch Deckel bekannt, welche zusätzlich nach hinten über das Fahrzeugdach bewegbar sind. Beide Varianten haben den Vorteil, daß - gegenüber Schiebe- oder Schiebeausstelldächern - weniger Bauhöhe benötigt wird, was der Kopffreiheit der vorderen Fahrzeuginsassen zugute kommt.

Der Erfindung liegt die Aufgabe zugrunde, ein gattungsgemäßes Fahrzeugdach mit einer durch einen Deckel verschließbaren Dachöffnung so weiter zu bilden, daß ein größtmöglicher Diebstahlschutz erreicht wird.

Die Aufgabe wird durch die kennzeichnenden Merkmale des Patentanspruches 1 gelöst.

Dadurch, daß die Vorderkante des Deckels absenkbar und nach vorne in den Rahmen einschiebbar ist, entsteht zwischen der Hinterkante des Deckels und dem sich nach hinten anschließenden Dachabschnittes ein schmaler Spalt, über den Luft aus dem Fahrgastraum entweichen kann. Da der Spalt schmäler als der nach oben offene, U-förmige und in die Dachöffnung hineinragende rückwärtige Abschnitt des Rahmens ist, wird der Spalt zum Fahrgastraum hin durch den Rahmenabschnitt abgedeckt. Dadurch ist es nicht möglich, längliche Gegenstände in den Fahrgastraum einzuführen und dort beispielsweise die Türverriegelung zu betätigen. Dies wird nicht nur durch den etwa horizontalen Abschnitt des U-förmig ausgebildeten Rahmens erschwert, sondern insbesondere auch durch den vorderen, etwa senkrechten Schenkel des U-Profils unmöglich gemacht. Dieser vordere Schenkel bildet gleichzeitig eine Wand der durch das U-Profil gebildeten Wasserrinne. Diese Wasserrinne steht mit einem Wasserablauf in Verbindung und sorgt dafür, daß durch den Spalt eingedrungenes Wasser abgeführt wird und nicht in den Fahrgastraum gelangen kann. Trotz des Umstandes, daß durch den Spalt der Zugriff zum Fahrgastraum verwehrt ist, kann die Luft aus dem Fahrgastraum über den Spalt nach außen entweichen. Bei geschlossenem Deckel wirkt zwischen der Hinterkante des Deckels und dem sich daran anschließenden Dachabschnitt eine Dichtung, welche an einem der Bauteile befestigt ist. Wird der Deckel jedoch zur Erzeugung des gewünschten Spaltes etwas nach vorne geschoben, so kommt die Dichtung frei, wodurch eine Verbindung vom Fahrgastraum zur Umgebung geschaffen ist. Die vom Fahrgastraum entweichende Luft muß zunächst den vorderen Schenkel des U-förmigen Rahmenabschnitts überwinden, wird anschließend etwa waagerecht zum Grund des Rahmens weitergeführt und anschließend um etwa 90 Grad durch den hinteren Schenkel des Rahmenabschnitts abgelenkt und durch den Spalt nach außen geführt.

Besonders vorteilhaft ist, wenn die Hinterkante des Deckels etwa rechtwinkelig nach unten abgestellt ist. Dadurch entsteht ein Labyrinth, welches zwar der Luft nur geringen Widerstand entgegensetzt, jedoch ein Einführen von Werkzeugen und Hilfsmitteln in den Fahrgastraum unmöglich macht.

Durch die erfindungsgemäße Ausgestaltung wird eine Belüftungsöffnung geschaffen, welche einen größtmöglichen Diebstahlschutz gewährleistet. Dies wird jedoch nicht durch den Nachteil einer größeren Bauhöhe erkauft. Es wird nur der ohnehin bei einem solchen Deckel notwendige Rahmen ausgenützt. Dabei ist zweckmäßig, wenn der hintere Schenkel des vorderen Rahmenabschnitts kürzer ausgeführt wird, um ein Eintauchen der Vorderkante des Deckels in den Rahmen zu erleichtern.

Wenn die Vorderkante des Deckels in den Rahmen eingeschoben ist, dann nimmt der Deckel insgesamt eine leicht nach vorne geneigte Stellung ein, da die Hinterkante des Deckels etwa in Höhe des sich nach hinten anschließenden Dachabschnitts verbleibt. Gemäß einer vorteilhaften Weiterbildung der Erfindung kann der Deckel in einen vorderen und einen rückwärtigen Abschnitt unterteilt sein und beide Abschnitte gelenkig miteinander verbunden sein. Für die gelenkige Verbindung ist es ausreichend, wenn durch sie nur ein sehr geringer Schwenkwinkel möglich ist.

Bei dieser Ausgestaltung des Deckels ist es möglich, die Führung für den Deckel so auszubilden, daß bei nach vorne in den Rahmen eingeschobener Vorderkante des vorderen Abschnitts des Deckels der rückwärtige des Deckels etwa flächenbündig mit dem Fahrzeugdach verläuft. Durch den leicht abgewinkelten Deckel wird eine verbesserte Anpassung desselben an den Strömungsverlauf bei bewegtem Fahrzeug erreicht und dadurch der Luftwiderstandsbeiwert günstig beeinflußt und das Geräuschniveau reduziert.

Durch den unterteilten Deckel ist es gleichsam möglich, daß durch die Führung des Deckels sein rückwärtiger Abschnitt etwa parallel über die Dachöffnung bewegbar ist und der vordere Abschnitt nach vorne geneigt bis zum Rand der Dachöffnung verläuft. Diese Stellung entspricht etwa einem ausgestellten Deckel bekannter Ausstelldächer. Diesen gegenüber hat der vorgeschlagene abgewinkelte Deckel den Vorteil, daß er insgesamt strömungsgünstiger ist und im Fahrbetrieb weniger zu Windgeräuschen neigt.

Wenn eine größere Freilegung des Dachausschnitts gewünscht ist, dann kann der gelenkig unterteilte Deckel durch die Führung mit seinem ruckwärtigem Abschnitt etwa parallel über das Fahrzeugdach verschiebbar sein und der vordere Abschnitt des Deckels nach vorne geneigt verlaufen. Auch hier kommen die vorstehend genannten Vorteile voll zum tragen. Gegenüber bekannten Deckeln, welche über das Fahrzeugdach bewegbar sind und welche zu diesem einen spitzen Winkel einschließen, wird durch die parallele Anordnung des rückwärtigen Deckelabschnitts bei der vorgeschlagenen Lösung die Querschnittsfläche des Fahrzeuges weniger stark vergrößert, was insgesamt den Luftwiderstand günstig beeinflußt.

Ein Ausführungsbeispiel der Erfindung ist in der Zeichnung dargestellt und wird nachfolgend näher beschrieben. Es zeigt

Figur 1 in schematischer Darstellung einen Längsschnitt durch das mit einer Dachöffnung versehene Dach eines Personenkraftwagens, wobei die Dachöffnung durch einen sich in Lüftungsstellung befindlichen Deckel verschlossen ist,

Figur 2 den Deckel aus Figur 1, wobei die Hinterkante des Deckels angehoben ist und

Figur 3 den Deckel aus Figur 1 in einer teilweise über das Fahrzeugdach bewegten Stellung.

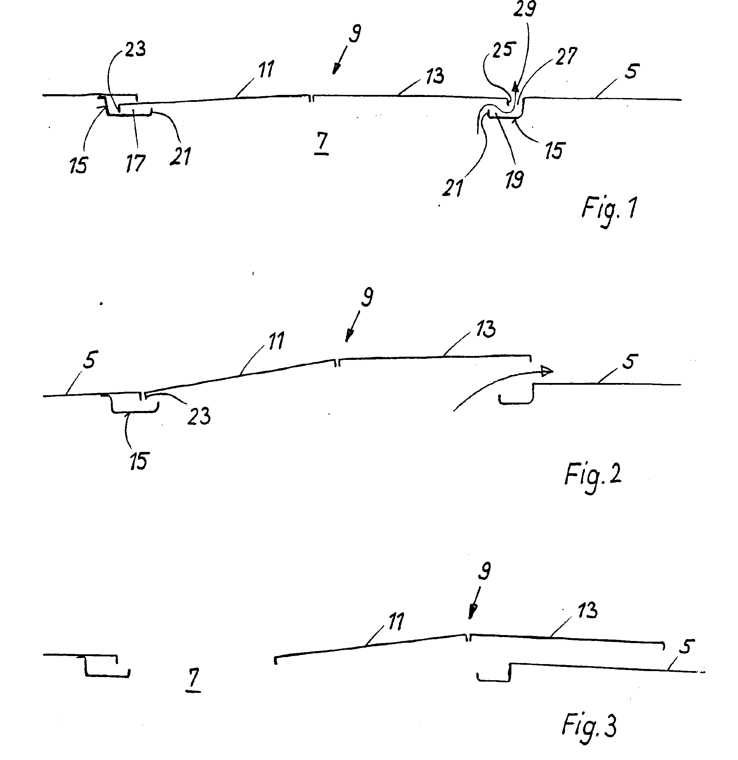

Ein in Figur 1 schematisch und nur abschnittsweise dargestelltes Fahrzeugdach 5 ist mit einer Dachöffnung 7 versehen, welche durch einen Deckel 9 verschließbar ist.

Der Deckel 9 ist in einen vorderen Abschnitt 11 und einen ruckwärtigen Abschnitt 13 unterteilt. Beide Abschnitte sind gelenkig miteinander verbunden, was in der Zeichnung im einzelnen nicht dargestellt ist.

Die Dachöffnung 7 ist durch einen umlaufenden Rahmen 15 begrenzt, welcher einen nach oben offenen, etwa U-förmigen Querschnitt aufweist. Der Rahmen 15 bildet auch eine Wasserrinne. Zu diesem Zweck ist der Rahmen 15 in die Dachöffnung 7 hineinragend ausgebildet. Der in Figur 1 gezeigte Schnitt durch den vorderen Abschnitt 17 des Rahmens 15 und des rückwärtigen Abschnitts des Rahmens 15 lassen deutlich innere Wände 21 erkennen, welche den Rahmen 15 bzw. die Wasserrinne zur Dachöffnung 7 hin begrenzen.

Der Deckel 9 läßt sich durch eine in der Zeichnung nicht dargestellte Führung in verschiedene Stellungen bewegen, von denen drei in den Figuren 1 bis 3 wiedergegeben sind.

In Figur 1 ist die Vorderkante 23 des vorderen Abschnitts 11 des Deckels 9 abgesenkt und nach vorne in den Rahmen 15 eingeschoben. Der rückwärtige Abschnitt 13 des Deckels 9 verläuft hingegen flächenbündig zu dem ihn umgebenden Fahrzeugdach 5. Die beiden Abschnitte 11 und 13 des Deckels 9 schließen also einen Winkel ein.

Durch das Einschieben der Vorderkante 23 des vorderen Abschnitts 11 des Deckels 9 in dem vorderen Abschnitt 17 des Rahmens entsteht zwischen der Hinterkante 25 des rückwärtigen Abschnitts 13 des Deckels 9 und dem sich daran nach hinten anschließenden Fahrzeugdach 5 ein Spalt 27.

Über den Spalt 27 kann Luft aus dem Fahrgastraum nach außen entweichen. Die Luft muß dabei ein Labyrinth passieren, welches durch den rückwärtigen Abschnitt 19 des Rahmens 15 mit seiner inneren Wand 21 und der nach unten abgestellten Hinterkante 25 des rückwärtigen Abschnitts 13 des Deckels 9 gebildet ist. Die Luftführung durch das Labyrinth ist durch einen mit 29 bezeichneten Pfeil dargestellt.

Figur 2 zeigt eine Stellung des Deckels 9, bei der die Vorderkante 23 des vorderen Abschnitts 11 des Deckels 9 nicht in den Rahmen 15 eingeschoben ist, sondern bei der sich die Vorderkante 23 unmittelbar an das Fahrzeugdach 5 anschließt. Von dort erstreckt sich der vordere Abschnitt 11 des Deckels 9 schräg nach oben. Der sich daran anschließende rückwärtige Abschnitt 13 des Deckels 9 verläuft etwa parallel zum Fahrzeugdach 5. In dieser Stellung kann vermehrt Luft aus dem Fahrgastraum abgeführt werden, jedoch wird nicht das hohe Maß an Diebstahlsicherheit wie bei der in Figur 1 gezeigten Stellung des Deckels 9 erreicht.

Schließlich zeigt Figur 3 eine Stellung des Deckels 9, bei der sein rückwärtiger Abschnitt 13 über das Fahrzeugdach 5 bewegt ist. Der vordere Abschnitt 11 des Deckels 9 verläuft dabei nach vorne geneigt. Diese Position des Deckels 9 gibt fast die Hälfte der Dachöffnung 7 frei. Durch die geneigte Anordnung des vorderen Abschnitts 11 und dem parallelen Verlauf des rückwertigen Abschnitts 13 des Deckels 9 wird im Fahrbetrieb ein guter Strömungsverlauf der Luft erreicht und dadurch der Luftwiderstand sowie Geräusche reduziert.

## Patentansprüche

1. Fahrzeugdach mit einer von einem umlaufenden Rahmen begrenzten Dachöffnung, wobei der Rahmen zumindest in seinen vorderen und rückwärtigen Abschnitten nach oben offene, U-förmige und in die Dachöffnung hineinragende Abschnitte aufweist und an dem Rahmen über eine Führung verstellbar ein Deckel gelagert ist, dessen Hinterkante gegenüber dem Fahrzeugdach ausstellbar ist, dadurch gekennzeichnet, daß die Führung des Deckels (9) derart ist, daß durch sie die Vorderkante (23) des Deckels (9) absenkbar und nach vorne in den Rahmen (15) einschiebbar ist, wobei die Hinterkante (25) des Deckels (9) etwa in Höhe des sich nach hinten anschließenden Dachabschnitts verbleibt und zwischen diesem und der Hinterkante (25) des Deckels (9) ein Spalt (27) gebildet ist, über den Luft aus dem Fahrgast entweichen kann.

**2.** Fahrzeugdach nach Anspruch 1, dadurch gekennzeichnet, daß die Hinterkante (25) des Deckels (9) etwa rechtwinkelig nach unten abgestellt ist.

**3.** Fahrzeugdach nach Anspruch 1 oder 2, dadurch gekennzeichnet, daß der Deckel (9) in einen vorderen (11) und einen rückwärtigen Abschnitt (13) unterteilt ist und beide Abschnitte gelenkig miteinander verbunden sind.

**4.** Fahrzeugdach nach Anspruch 3, dadurch gekennzeichnet, daß bei nach vorne in den Rahmen (15) eingeschobener Vorderkante (23) des vorderen Abschnitts (11) des Deckels (9) der rückwärtige Abschnitt (13) des Deckels (9) etwa flächenbündig mit dem Fahrzeugdach(5) verläuft.

**5.** Fahrzeugdach nach Anspruch 3 oder 4, dadurch gekennzeichnet, daß durch die Führung des Deckels (9) sein rückwärtiger Abschnitt (13) etwa parallel über die Dachöffnung (7) bewegbar ist und der vordere Abschnitt (11) nach vorne geneigt bis zum Rand der Dachöffnung (7) verläuft.

**6.** Fahrzeugdach nach Anspruch 3 oder 4, dadurch gekennzeichnet, daß durch die Führung des Deckels (9) sein rückwärtiger Abschnitt (13) etwa parallel über das Fahrzeugdach (5) verschiebbar ist und der vordere Abschnitt (11) nach vorne geneigt verläuft.

## Claims

**1.** Vehicle roof having a roof opening delimited by a frame surround which at least in its front and rear portions incorporates upwardly open U-shaped sections which project into the roof opening, and a lid being mounted on the frame so as to be adjustable via a guide, the rear edge of said lid being adapted to be vented relative to the vehicle roof,
characterised in that the guide for the lid (9) is such that by means of it the front edge (23) of the lid (9) can be lowered and slid forwards into the frame (15), the rear edge (25) of the lid (9) remaining more or less level with the roof portion adjoining it to the rear and between the latter and the rear edge (25) of the lid (9) forming a gap (27) through which air can escape from the passenger compartment.

**2.** Vehicle roof according to claim 1, characterised in that the rear edge (25) of the lid (9) is bent downwards more or less at right angles.

**3.** Vehicle roof according to claim 1 or 2, characterised in that the lid (9) is divided into a front (11) and a rear portion (13) and the two portions are hinged to one another.

**4.** Vehicle roof according to claim 3, characterised in that with the front edge (23) of the front portion (11) of the lid (9) slid forwards into the frame (15) the rear portion (13) of the lid (9) extends more or less flush with the surface of the vehicle roof (5).

**5.** Vehicle roof according to claim 3 or 4, characterised in that by means of the guide for the lid (9) its rear portion (13) can be moved more or less parallel across the roof opening (7) and the front portion (11) slopes forwards as far as the rim of the roof opening (7).

**6.** Vehicle roof according to claim 3 or 4, characterised in that by means of the guide for the lid (9) its rear portion (13) can be moved more or less parallel across the vehicle roof (5) and the front portion (11) slopes forwards.

## Revendications

1.- Toit de véhicule automobile comportant une ouverture de toit limitée par un cadre périphérique, le cadre présentant, au moins sur ses côtés avant et arrière, des segments ouverts vers le haut, en forme d'U et faisant saillie dans l'ouverture de toit, et un couvercle qui est monté de façon mobile sur le cadre au moyen d'un guide et dont le bord arrière peut être projeté par rapport au toit du véhicule, caractérisé en ce que le guide du couvercle (9) est tel que, sous son effet, le bord avant (23) du couvercle (9) puisse être abaissé et introduit en glissant vers l'avant dans le cadre (15), le bord arrière (25) du couvercle (9) restant à peu près au niveau de la partie du toit qui lui fait suite vers l'arrière et une fente (27), par laquelle l'air peut s'échapper du compartiment des passagers, étant formée entre cette partie du toit et le bord arrière (25) du couvercle (9).

2.- Toit de véhicule selon la revendication 1, caractérisé en ce que le bord arrière (25) du couvercle (9) est rabattu à peu près à angle droit vers le bas.

3.- Toit de véhicule selon la revendication 1 ou 2, caractérisé en ce que le couvercle (9) est subdivisé en une partie avant (11) et une partie arrière (13), et en ce que ces deux parties sont raccordées l'une à l'autre de façon articulée.

4. - Toit de véhicule selon la revendication 3, caractérisé en ce que lorsque le bord avant (23) de la partie avant (11) du couvercle (9) a été introduit en glissant vers l'avant dans le cadre (15), la partie arrière (13) du couvercle (9) s'étent à peu près dans l'alignement du toit (5) du véhicule.

5. - Toit de véhicule selon la revendication 3 ou 4, caractérisé en ce que sous l'effet du guide du couvercle (9), la partie arrière (13) de celui-ci est déplaçable à peu près parallèlement au-dessus de l'ouverture de toit (7), sa partie avant (11) s'étendant alors en position inclinée vers l'avant jusqu'au bord de l'ouverture de toit (7).

6. - Toit de véhicule selon la revendication 3 ou 4, caractérisé en ce que sous l'effet du guide du couvercle (9), la partie arrière (13) de celui-ci est déplaçable à peu près parallèlement par-dessus le toit (5) du véhicule, sa partie avant (11) s'étendant alors en position inclinée vers l'avant.

Fig. 1

Fig. 2

Fig. 3